# EUROPEAN PATENT APPLICATION

(11) **EP 4 047 482 A1**
(43) Date of publication of application: **24.08.2022**
(21) Application number: 21158306.7
(22) Date of filing: 19.02.2021
(51) Int. Cl.: G06F 11/36, G05B 19/042

(54) **IMPROVED CHECKING OF CORRECTNESS OF A PLC PROGRAM**

(71) Applicant: Mitsubishi Electric R&D Centre Europe B.V., 1119 NS Schiphol Rijk Amsterdam (NL); Mitsubishi Electric Corporation, Tokyo 100-8310 (JP)
(72) Inventor: COUSINEAU, Denis, 35708 RENNES Cédex 7 (FR); FAISSOLE, Florian, 35708 RENNES Cédex 7 (FR); MENTRÉ, David, 35708 RENNES Cédex 7 (FR); INOUE, Hiroaki, Tokyo 1008310 (JP)
(74) Representative: Plasseraud IP

(57) **Abstract**

The present invention is related to a method for checking correctness of a PLC program described by functional specifications typically presented as a timing chart. The method comprises:
- S1: translating the PLC program into a model,
- S2: translating the timing chart and integrating said timing chart into the model,
- S3: computing abstract semantics, to infer information eventually missing in the timing chart,
- S4: predicating transformation, and deducing properties to be verified, from the model and from predefined PLC formalized instructions, in order to satisfy timing chart verification,
- S5: solving and checking whether said properties are always verified, or providing counter-examples,
- S6: translating said counter-examples into PLC model errors events initial configurations,
- S7: simulating execution,
- S8: assembling states and events executions variables values, and
- S9: translating back to PLC program.

## Description

The present invention relates to programmable logic controllers.

Programmable logic controllers (here after "PLC") are industrial digital computers used as automation controllers of manufacturing processes, such as assembly lines, or robotic devices.

PLCs can simulate the hard-wired relays, timers and sequencers they have replaced, via software that expresses the computation of outputs from the values of inputs and internal memory.

Typically, IEC 61131-3 standard defines several programming languages that can be used to develop PLCs software, like Ladder logics, Function Blocks, Structured Test, among others. Ladder logics for example uses circuits diagrams of relay logic hardware to represent a PLC program by a graphical diagram, while Structured Text on the other hand is a textual programming language.

In conventional development of software, a great part of the development time is dedicated to debugging. Debugging programs is crucial, especially in the case of Factory Automation (FA) since bugs in factories can be extremely expensive in terms of human and material damages, and plant closing time. Debugging a PLC program is particularly difficult, time consuming and costly. Bugs can be seen as the violation, at some point of a program, of some property concerning values of inputs/outputs and local memory of the program.

The objective of debugging consists in detecting those property violations before running the code in production, *i.e.* finding initial values of inputs and internal memory that lead to a property violation, when executing the program. Since it is almost impossible (and way too costly) to check all possible executions of a program, the usual method consists in developing and running some tests (*i.e.* executing the program on a particular initial configuration and check its behavior).

However, testing is by essence not exhaustive and its development is very costly and time-consuming.
A solution to circumvent these limitations consists in performing formal deductive verification.

Deductive verification is based on checking that, given certain assumptions, the program yields the intended behavior and result for all possible executions. The principle of using deductive verification to check the absence of run-time errors in PLC programs is disclosed in document EP3715975 (hereafter labelled "[1]" in the list of prior cited documents at the end of the present specification).

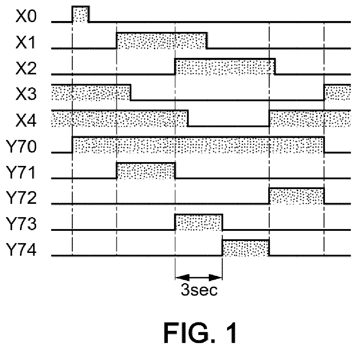

For higher-level properties, the intended behavior of PLC programs is usually described as timing charts, *i.e.,* temporal evolution of outputs values according to some inputs values evolution. As an example of illustration, a timing chart specification is shown of figure 1. The evolution of the X variables reflects hypotheses on inputs values while the evolution of the Y variables represents expected outputs values.

A change in an input value (or the ending of a timer) is called here an "event". Such an event corresponds to a single execution of the PLC program. Verifying the specification consists in verifying that the values of outputs change (or do not change) at each event, accordingly to the timing chart, and that they do not change between two events. Those inter-events are called here "states", and correspond to an undefined number of successive executions of the PLC program.

Two known ways for verifying that a PLC program satisfies a timing chart specification can be mentioned.
"Testing" is the first one and the most common. Testing consists in executing the program from the initial configuration, with different scenarios of inputs evolution (only the number of executions during states could change, not the order of the inputs change given by the timing chart). The problem with testing is that it is not fully efficient. It is expensive in human time and computer processing (CPU) time to execute many different configurations, and since the number of differently timed inputs evolutions is infinite, it is impossible to test all executions, and it cannot be exhaustive: if the test finds no error, that does not mean that there never can be any error. Moreover, once testing detects an error, the only information that the developer can reach to is the initial configuration of inputs and internal memory that lead to the error. It is therefore often hard to understand the fundamental reason of the error and why the considered initial configuration leads to an error at another point of the program, after several executions of the program.

The most advanced way to verify timing charts specifications is model-checking (as disclosed for example in reference [2] given at the end of the present specification). Model-checking consists in defining a model of a program, in the form of an automaton, with states and transitions between those states. Then model-checking simulates different executions of the program with different paths from states to states in the automaton. Errors are modeled by specific states that should not be reached. Model-checking verifies that those states are unreachable.
The limitations are that model-checking is expensive, time consuming (CPU working-time) and not exhaustive.
It allows to consider consecutive executions of a same program, but complexity is often exponential, and as a consequence, it rapidly takes a lot of CPU time to simulate the executions of the program. Therefore this method cannot be exhaustive for most PLC programs of typical industrial size.

In brief, in order to address verification of timing charts specifications for PLC programs, testing is a possible method but is not exhaustive, generally inefficient and does not give traceability of detected errors. Model-checking is for its part a little bit more efficient, allows to consider consecutive executions of the same program and provides an execution trace when the verification fails. But, it remains relatively expensive for large, industrial programs and it is still not exhaustive.
Although deductive verification provides an exhaustiveness guarantee, it is not tailored for temporal properties verification. Indeed, while deductive verification needs full knowledge of the program's variables evolution, timing charts are underspecified, meaning that the evolution of some other program's variables is missing and the elapsed time between two state changes is not always known. Moreover, timing charts include fixed-timed events (3 seconds in the example of figure 1 commented above) that constitute metaproperties of the program that are not directly accessible to deductive verification.
Our invention uses abstract semantics computation to allow deductive verification for timing charts specifications, and provide an exhaustiveness guarantee.

The present invention aims to improve the situation.

To that end, it proposes a computer implemented method for checking correctness of a PLC program (i.e. written in any PLC programming language, for example one of those defined by IEC 61131-3 standard). More particularly, this PLC program corresponds to a computer program of the type of a Programmable Logic Controller, described by temporal functional specification data (such as data of a timing chart as presented above when referring to figure 1). The method comprises:
- S1: translating the PLC program into a model,
- S2: translating the temporal functional specification data and integrating the thus translated temporal functional specification data into the model,
- S3: computing abstract semantics, to infer information missing in the temporal functional specification data,
- S4: performing predicate transformation, in order to deduce, from the model and predefined formalized PLC instructions, properties to be verified so that the PLC program satisfies said temporal functional specification data,
- S5: solving and checking whether said properties are always verified, or providing counter-examples.

The implementation of this method makes it possible then to detect the first point of the PLC program when a property is not verified and let a programmer make appropriate corrections.

The computation of abstract semantics according to S3, followed by the deductive verification implemented in S4, has proven to be particularly effective especially for PLC programs described by temporal functional specifications such as timing charts.

In a particular embodiment, the method can further comprise, after S5:
- S6: translating said counter-examples into PLC model errors events initial configurations,
- S8: assembling at least states variables values and events initial variables values,
- S9: translating back to PLC program.

For example, in S6, the translation of said counter-examples can give at least one of:
- an output value which is not satisfied after a specific event described by said temporal functional specification data,
- and at least one variable value that leads to a specification violation.

Finally, this succession of steps S1 to S9 makes it possible for a programmer to have, after S9, a clear view of bugs which can potentially be generated owing to model specification violation scenarios.

For example in an embodiment, in S9, the translation back into the PLC program can be given with intermediate values information, and model specification violation scenarios data, including values of inputs, internal memory and outputs for each event and each state of execution of the PLC program, until an eventual non-satisfied event.

Such intermediate values can be obtained for example, in a particular embodiment, by carrying out, after S6 and before S8:
- S7: simulating execution so as to obtain intermediate values of events executions, in addition to initial configurations,
and, in S8, states variables values and events initial variables values, and furthermore intermediate variables values, can thus be assembled.

For example, the intermediate values of events executions can be obtained typically from the aforesaid initial configurations.

In fact, in S6, the aforesaid counter-examples can be translated into information comprising for example an output value which is not satisfied after a specific event of the timing chart (or more generally by the aforesaid temporal functional specification data). These information give thereby values of variables that lead to a corresponding specification violation.

These values of variables can describe more particularly events initial configurations of the PLC program model, and correspond to values of inputs and internal memory at beginning of events of the timing chart and until an eventual non-satisfied event. Once the bug corresponding to such a non-satisfied event is corrected, the method can be started again from S1 until a new eventual non-satisfied event is met, and so on. Finally the method makes it possible to detect violations at any point of the timing chart specification and to check the global consistency of the consecutive points of the timing chart.

Moreover, in order to carry out S7, model events executions intermediate values can be computed in S7 from PLC model errors events initial configurations obtained from S6, and from predefined PLC formalized instructions. This makes it possible to simulate then an execution of the PLC program and to recompute, from events initial configurations given in S6, intermediate values of internal memory and outputs, during events executions, until an eventual non-satisfied event.

Moreover, in S8, events executions values from S7 and states variables values domains from S3 are assembled in order to obtain complete errors scenarios, defining domains of values that the aforesaid variables can take during states, and events executions, from a start of the PLC program and until an eventual non-satisfied event.

Examples of embodiments of the first steps S1 to S5 presented above are given hereafter.

For example, for the implementation of S1, the model obtained from S1 can refer to predefined models of PLC primitives and be expressed in a logical framework of first-order logic.

Typically, at least integer and Boolean references can be used to model inputs, internal memory and outputs of the PLC program.

Moreover, the temporal functional specification data, input as argument in S2, can be given in the form of data of a timing chart expressed in a language of the type of PlantUML (as described for example in reference [5] given below).

The implementation of S2 can give specifications assertions which are expressed in a logical framework of predicate logic. A plurality of consecutive copies of the model, possibly embedded in loops, can be used thus to represent consecutive states and events given by the timing chart.

In S3, domains of variables values taken during states of execution of the PLC program, can be inferred, at least for some of these variables which are not specified in the temporal functional specification data.

In an embodiment, in S4, Dijkstra's weakest precondition calculus can be used to ensure that, if the generated properties are satisfied, then the PLC program always satisfies corresponding functional specifications.

In an embodiment, in S5, automated solvers can be used so as to:
- prove said properties generated in S4, or
- find counter-examples to said properties, represented by values for inputs and internal memory in the model for which said properties are not satisfied.

The present invention aims also at a computer program comprising instructions which, when the program is executed by a computer device, cause the computer device to carry out the method presented above. The invention aims also at a non-transitory readable computer medium storing instructions data of such a computer program.

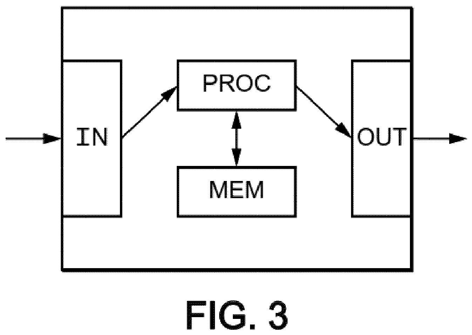

The present invention aims also at a computer device comprising a processing circuit for carrying out the method presented above (an example of such a processing circuit being presented in figure 3 commented below).

More details and example of embodiments of the present invention are described hereafter with reference to the appended drawings where :
- Figure 1 shows an example of a timing chart of a PLC program,
- Figure 2 shows an example of a succession of steps of a method according to the invention, in a particular embodiment,
- Figure 3 schematically shows an example of a computer device according to the invention, in a particular embodiment.

As presented above, Programmable Logic Controllers (PLC) allow to control, among other, assembly lines and electronic robots. PLCs are difficult to debug, in particular for functional specifications described as timing charts. Bugs cost a lot in Factory Automation systems, in terms of down-time and sometimes human and hardware damages. Current techniques to check the correctness of PLC programs according to timing charts specifications are not exhaustive, time consuming and generally not efficient for understanding the problem when a bug is detected.

It is proposed hereafter an exhaustive, efficient, and automated solution to check the correctness of PLC programs according to timing charts. This solution uses both Abstract Semantics Computation, to infer missing information from the timing chart, and Deductive Verification, to provide a guarantee that all bugs will be detected. The solution detects violations at any point of the timing chart specification and checks the global consistency of the consecutive points of the timing chart. In case it detects a violation, this solution can display its scenario to the programmer as a sequence of executions from the initial configuration to the faulty point of the timing chart. It provides an efficient tool for reducing safely time-to-deploy and increases confidence in PLC programs in factory automation industry.

The combination of:
- Abstract Semantics Computation (according to step S3 presented below), and
- Deductive Verification (according to step S4 presented below),
has shown a high efficiency when specifically applied to PLC programs described by timing charts specifications.
Indeed, deductive verification provides an exhaustiveness guarantee on the properties it verifies, but it is not tailored for temporal properties verification, in which the number of executions between two events can be arbitrary big, hence the values the internal memory variables can take during two events is not known. On the other hand, Abstract Semantics Computation can give over-approximations of the values variables can take during an arbitrary number of successive executions of a program. It also provides an exhaustiveness guarantee, but it is not as scalable as Deductive Verification. Hence it cannot be run on a complete PLC program of typical industrial size. The solution proposed here consists in using Abstract Semantics Computation on particular points of the PLC program, in order to infer the variables values information that is necessary to perform Deductive verification, leading to a verification that both provides exhaustiveness guarantee and is thus scalable to real-world industrial PLC programs.

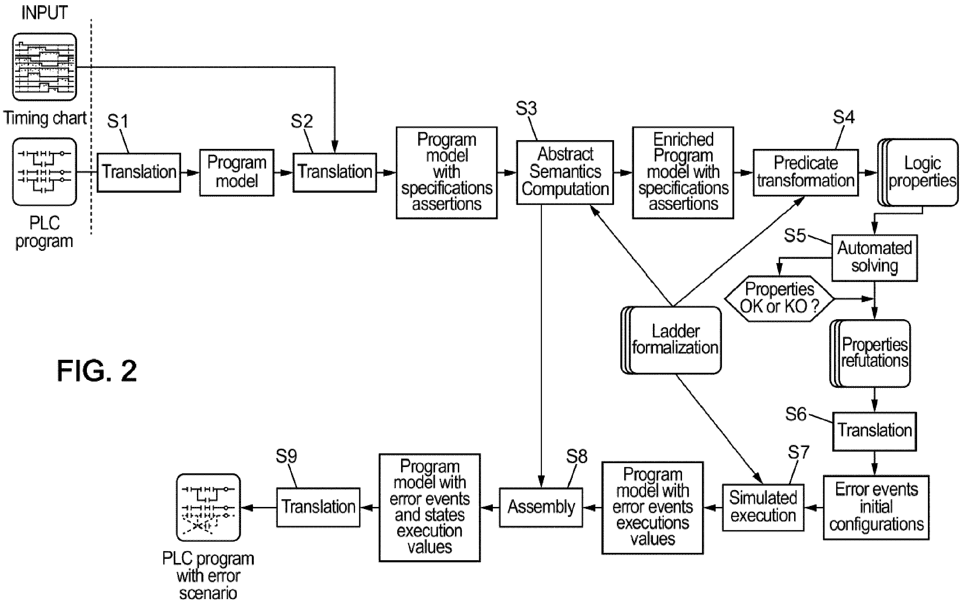

Figure 2 shows the global architecture of a possible implementation of this solution for an automated deductive verification of PLC temporal specifications. The implementation is divided in nine different process steps.

Step S1 relates to automatically translating a PLC program into a model. This process translates automatically a PLC program into a model that refers to previously defined models of PLC primitives: logical checkers (contacts), actuators (coils), logical circuits and instructions. The model may be expressed in the logical framework of first-order logic. Integer and Boolean references may be used to model inputs, internal memory and outputs of the program. Polymorphic types may be used to factorize the number of model primitives. This process may add information to the model elements, like code locations, in order to link them to the original PLC elements, or instructions to instrument the tools that are used in the following of the process.

Step S2 relates to translating the timing chart and integrating it into the program model. The translation of the timing chart into specifications assertions in the program model can be performed possibly from a given language like PlantUML (reference [5] of the cited prior art documents). Those assertions may be expressed in the logical framework of predicate logic. Several consecutive copies of the program model, possibly embedded in loops, may be used to represent the consecutive states and events given by the timing chart.

Step S3 relates to computing abstract semantics, to infer necessary information that is missing in the timing chart. This process uses sound abstract semantics computation, for example Abstract Interpretation [6] to infer missing information for the use of deductive verification afterwards. For example it can infer loop invariants, i.e. domains of values that the variables can take during states (whatever the number of executions of the program happens to be during the state), especially for internal variables whose values are not specified in a timing chart. Without this valuation information, deductive verification is not able to handle properties that should be verified after a state.

Step S4 consists in transforming predicates, and more particularly deducing properties to verify, from this model and from some predefined PLC formalization. This process combines the model translation of the PLC program and the timing chart, with predefined models of instructions, to compute properties that much hold at some point of the sequence of executions of the PLC program, in order to satisfy timing chart verification. This process may use Dijkstra's weakest precondition calculus [3] to ensure that such a computation is sound (i.e. if properties are satisfied, then the PLC program always satisfies the specification), while minimizing the size of computed properties.

Step S5 consists in automated solving, and checking whether properties are always verified, or providing counter-examples. This process uses automated solvers (like SMT-solvers [4]) in order to either formally prove the properties generated by in step S4, or find counter-examples to these properties. In the former case, it ensures, together with the soundness of computation of step S4, that the PLC program fully satisfies the timing chart specification, for any sequence of executions. In the latter case, it provides a counter-example to the properties, i.e. values for inputs and internal memory in the model for which the properties are not satisfied.

Step S6 consists in translating properties counter-examples into PLC model errors events initial configurations. In the case where step S5 finds a counter-example to a property generated in step S4, this step S6 translates this unsatisfied property into information of which output value is not satisfied after a specific event of the timing charts, and translates the associated counter-example to values of variables that lead to this specification violation, namely events initial configurations of the PLC program's model (i.e. values for the model elements that correspond to the values of inputs and internal memory at beginning of the events of the timing chart until the one that is not satisfied).

Step S7 consists in a simulated execution. To that end, model events executions intermediate values are computed from PLC model errors events initial configurations. This step S7 may use another PLC formalization to simulate the execution of the PLC program and recompute, from events initial configurations given in step S6, all the intermediate values of internal memory and outputs, during events executions, until the event that is not satisfied.

Step S8 consists in assembling states and events executions variables values. This process assembles events executions values from step S7 and states variables values domains from step S3 in order to obtain complete errors scenarios.

This step S8 can combine the pieces of information from steps S3 and S7, to give the full specification violation scenario, i.e. domains of values that the variables can take during states, and events executions, from the start of the PLC, until the event that is not satisfied.

Step S9 relates to the translation back to PLC program. This process translates back model intermediate values into PLC program with intermediate values information, and for example can propose a print of the result to a user. The process of step S9 can finally translate back the model specification violation scenario, to the original PLC program with values of inputs, internal memory and outputs for each event and each state until the event where the specification is not satisfied. It may print those values as the original PLC program ones, enriched with colors for binary values and labels for integers values. This error scenario, together with code location and additional information added to model in step S1 give a very complete overview on the violation that was found and how to fix it.

The present invention aims also at a computer device comprising a processing circuit for carrying out the method as defined above with reference to figure 2.

Now referring to figure 3, such a processing circuit may comprise:
- An input interface IN to receive data of the PLC program, of its timing chart, and possibly of predefined PLC formalized instructions,
- A memory MEM for storing data of instructions of a computer program according to the present invention, as well as possible transitory and/or non-transitory data necessary for implementing the execution of the computer program,
- A processor PROC being able to cooperate with the memory MEM so as to read and execute the instructions of the computer program stored therein,
- And an output interface OUT to provide the corrected PLC program data as well as values of inputs, internal memory and outputs for each event and each state until the event where the specification is not satisfied.

### Cited references

[1] Patent document publication: EP3715975
[2] Clarke, Edmund & Grumberg, Orna & Peled, Doron. (2001). Model Checking.
[3] E.W. Dijkstra. Hierarchical ordering of sequential processes, Acta Informatica , vol. 1, No.2, 1971, pp 115-138.
[4] C Barrett, R Sebastiani, S Seshia, and C Tinelli, "Satisfiability Modulo Theories." In Handbook of Satisfiability, vol. 185 of Frontiers in Artificial Intelligence and Applications, (A Biere, M J H Heule, H van Maaren, and T Walsh, eds.), IOS Press, Feb. 2009, pp. 825-885.
[5] Drawing UML with PlantUMLPlantUML Language Reference Guide. http://plantuml.com/guide
[6] Cousot, Patrick; Cousot, Radhia (1977). "Abstract Interpretation: A Unified Lattice Model for Static Analysis of Programs by Construction or Approximation of Fixpoints". Conference Record of the Fourth ACM Symposium on Principles of Programming Languages, Los Angeles, California, USA, January 1977. ACM Press. pp. 238-252.

## Claims

1. A computer implemented method for checking correctness of a PLC program,
said PLC program corresponding to a computer program of the type of a Programmable Logic Controller, described by temporal functional specification data,
the method comprising:
- S1: translating the PLC program into a model,
- S2: translating the temporal functional specification data and integrating translated temporal functional specification data into the model,
- S3: computing abstract semantics, to infer information missing in the temporal functional specification data,
- S4: performing predicate transformation, in order to deduce, from the model and predefined formalized PLC instructions, properties to be verified so that the PLC program satisfies said temporal functional specification data,
- S5: solving and checking whether said properties are always verified, or providing counter-examples.

2. The method of claim 1, wherein the method further comprises, after S5:
- S6: translating said counter-examples into PLC model errors events initial configurations,
- S8: assembling at least states variables values and events initial variables values,
- S9: translating back to PLC program.

3. The method of claim 2, wherein, in S6, the translation of said counter-examples gives at least one of :
- an output value which is not satisfied after a specific event described by said temporal functional specification data,
- and at least one variable value that leads to a specification violation.

4. The method according to anyone of claims 2 and 3, wherein the method further comprises, after S6 and before S8:
- S7: simulating execution so as to obtain intermediate values of events executions, in addition to initial configurations,
And, in S8, states variables values and events initial variables values, and furthermore intermediate variables values, are assembled.

5. The method according to claim 4, wherein, in S7, model events executions intermediate values are computed from PLC model errors events initial configurations obtained from S6, and from predefined PLC formalized instructions, to simulate an execution of the PLC program and to recompute, from events initial configurations given in S6, intermediate values of internal memory and outputs, during events executions, until an eventual non-satisfied event.

6. The method according to anyone of claims 4 and 5, wherein, in S8, events executions values from S7 and states variables values domains from S3 are assembled in order to obtain complete errors scenarios, defining domains of values that said variables can take during states, and events executions, from a start of the PLC program and until an eventual non-satisfied event.

7. The method according to anyone of the claims 2 to 6, wherein, in S9, the translation back into the PLC program is given with intermediate values information, and model specification violation scenarios data, including values of inputs, internal memory and outputs for each event and each state of execution of the PLC program, until an eventual non-satisfied event.

8. The method according to any one of the preceding claims, wherein said model obtained from S1 refers to predefined models of PLC primitives and is expressed in a logical framework of first-order logic.

9. The method of claim 8, wherein at least integer and Boolean references are used to model inputs, internal memory and outputs of the PLC program.

10. The method according to anyone of the preceding claims, wherein said temporal functional specification data, input as argument in S2, are given as a timing chart expressed in a language of the type of PlantUML.

11. The method of claim 10, wherein the implementation of S2 gives specifications assertions expressed in a logical framework of predicate logic, and wherein a plurality of consecutive copies of the model, embedded in loops, are used to represent consecutive states and events given by said timing chart.

12. The method according to anyone of the preceding claims, wherein, in S3, domains of variables values taken during states of execution of the PLC program, are inferred, at least for some of said variables being not specified in the temporal functional specification data.

13. The method according to anyone of the preceding claims, wherein, in S4, Dijkstra's weakest precondition calculus is used to ensure that, if properties are satisfied, then the PLC program always satisfies corresponding functional specifications.

14. The method according to anyone of the preceding claims, wherein, in S5, automated solvers are used so as to:
- prove said properties generated in S4, or
- find counter-examples to said properties, represented by values for inputs and internal memory in the model for which said properties are not satisfied.

15. A computer program comprising instructions which, when the program is executed by a computer device, cause the computer device to carry out the method according to anyone of the preceding claims.

16. A computer device comprising a processing circuit for carrying out the method according to anyone of claims 1 to 14.
